# EUROPEAN PATENT APPLICATION

(11) **EP 2 942 987 A1**
(43) Date of publication of application: **11.11.2015**
(21) Application number: 15166778.9
(22) Date of filing: 07.05.2015
(51) Int. Cl.: H04W 4/00, H04L 29/06, H04L 29/08, H04W 4/02

(54) **APPARATUS AND METHOD FOR CONTROLLING SYNCHRONIZING OF SERVICE TIMING WHILE MOVING BETWEEN SPACES IN ELECTRONIC DEVICE**

(30) Priority: 07.05.2014 KR 20140054208
(71) Applicant: Samsung Electronics Co., Ltd, Gyeonggi-do 443-742 (KR)
(72) Inventor: Park, Seong-Hee, Seoul (KR); Kang, Jae-Eun, Gyeonggi-do (KR); Kang, Han-Su, Seoul (KR); Park, Sung-Il, Gyeonggi-do (KR); Shin, Bong-Jhin, Gyeonggi-do (KR); Yang, Chil-Youl, Gyeonggi-do (KR); Lee, Myoung-Hwan, Gyeonggi-do (KR); Lee, Jang-Hee, Gyeonggi-do (KR); Lee, Chun-Ho, Gyeonggi-do (KR); Lee, Tae-Young, Seoul (KR)
(74) Representative: Nederlandsch Octrooibureau

(57) **Abstract**

The present disclosure relates to a sensor network, Machine Type Communication (MTC), Machine-to-Machine (M2M) communication, and technology for Internet of Things (IoT). The present disclosure may be applied to intelligent services based on the above technologies, such as smart home, smart building, smart city, smart car, connected car, health care, digital education, smart retail, security and safety services. Disclosed is a method for operating a mobile terminal, including detecting a movement of the mobile terminal and generating a message requesting a second service device to play contents being played by a first service device, and when the second service device is available, sending at least one of the generated message, content information, connectivity information, and functionality information to at least one of the second service device and a contents source device which provides the contents.

## Description

### BACKGROUND OF THE INVENTION

### 1. Field of the Invention

The present invention relates generally to wireless communication, and more particularly, to detecting a movement of a user and providing a service according to the movement of the user in an electronic device.

### 2. Description of the Related Art

The Internet, which is a connectivity network where humans generate and consume information, is now evolving to the Internet of Things (IoT) where distributed entities or things, exchange and process information without human intervention. There has emerged the Internet of Everything (IoE), which is a combination of the IoT technology and the Big Data processing technology through connection with a cloud server. Technology elements, such as "sensing technology", "wired/wireless communication and network infrastructure", "service interface technology", and "Security technology" have been required for IoT implementation, which has led to research in such technologies as a sensor network, Machine-to-Machine (M2M) communication, and Machine Type Communication (MTC).

The IoT environment may provide intelligent Internet technology services that enhance the value of human life by collecting and analyzing data generated among connected things. IoT may be applied to a variety of fields including smart home, smart building, smart city, smart car or connected cars, smart grid, health care, smart appliances and advanced medical services through convergence and combination between existing Information Technology (IT), as well as various industrial applications.
An avatar device is wearable by a user, stores user information, and has communication functionality. An example of the avatar device is a smart watch associated with a smart phone. The user can wear the avatar device in a particular space and use a service device for the user service according to a signal from the smart phone. When the user moves from a first space to a second space, however, the service device is disconnected and the user cannot use the service in another second space. When the user returns to the another first space, the service device cannot store the disconnection time of the service device. As a result, the service device needs to re-start the service. Accordingly, there is a need in the art for a method and apparatus for detecting a movement of a user and providing a service according to the movement of the user in an electronic device.

### SUMMARY OF THE INVENTION

The present invention has been made to address at least the above-mentioned problems and/or disadvantages and to provide at least the advantages described below. Accordingly, an aspect of the present invention is to provide a technique for detecting a movement of a user and providing a service according to the movement of the user in an electronic device.

According to an aspect of the present invention, a mobile terminal includes a controller configured to detect a movement of the mobile terminal and generate a message requesting a second service device to play contents being played by a first service device, and a transceiver configured to send, when the second service device is available, at least one of the generated message, content information, connectivity information, and functionality information to at least one of the second service device and a contents source device which provides the contents.

According to another aspect of the present invention, a contents source device includes a controller configured to detect a message requesting the contents source device to send, to a second service device, a content signal transmitted to a first service device, from at least one of a mobile terminal, the first service device, and the second service device, and a transceiver configured to send, to the second service device, the content signal transmitted to the first service device, according to the message.

According to another aspect of the present invention, a service device includes a transceiver configured to send a signal for recognizing the service device to a mobile terminal, and an output configured to output at least one of a content signal received from a contents source device and a content signal mirrored from the mobile terminal.

According to another aspect of the present invention, a method for operating a mobile terminal includes detecting a movement of the mobile terminal and generating a message requesting a second service device to play contents being played by a first service device, and sending, when the second service device is available, at least one of the generated message, content information, connectivity information, and functionality information to at least one of the second service device and a contents source device which provides the contents.

According to another aspect of the present invention, a method for operating a contents source device includes detecting a message requesting the contents source device to send, to a second service device, a content signal transmitted to a first service device, from at least one of a mobile terminal, the first service device, and the second service device, and sending contents transmitted to the first service device, to the second service device according to the message.

According to another aspect of the present invention, a method for operating aservice device includes sending, to a mobile terminal, a signal for recognizing the service device, and outputting at least one of a content signal received from a contents source device and a content signal mirrored from the mobile terminal.

### BRIEF DESCRIPTION OF THE DRAWINGS

The above and other aspects, features, and advantages of certain embodiments of the present invention will be more apparent from the following description taken in conjunction with the accompanying drawings, in which:
FIG. 1 illustrates a mobile terminal, a contents source device and a service device according to an embodiment of the present invention;
FIG. 2 illustrates a mobile terminal, a contents source device and a service device according to another embodiment of the present invention;
FIGs. 3A and 3B illustrate a service of a service device according to a movement of a mobile terminal according to an embodiment of the present invention;
FIG. 4 illustrates a service of a service device according to a movement of a mobile terminal according to another embodiment of the present invention;
FIG. 5 illustrates a service of a service device according to a movement of a mobile terminal according to another embodiment of the present invention;
FIG. 6 illustrates a method of a mobile terminal according to an embodiment of the present invention;
FIG. 7 illustrates a method of a contents source device according to an embodiment of the present invention;
FIG. 8 illustrates a method of a service device according to an embodiment of the present invention;
FIG. 9 illustrates a method of a mobile terminal according to another embodiment of the present invention;
FIG. 10 illustrates a method of a contents source device according to another embodiment of the present invention;
FIG. 11 illustrates a method of an electronic device according to another embodiment of the present invention;
FIG. 12 illustrates a mobile terminal according to an embodiment of the present invention;
FIG. 13 illustrates a contents source device according to an embodiment of the present invention; and
FIG. 14 illustrates an electronic device according to an embodiment of the present invention.

Throughout the drawings, like reference numerals will be understood to refer to like parts, components and structures.

### DETAILED DESCRIPTION OF EMBODIMENTS OF THE INVENTION

The following description with reference to the accompanying drawings is provided to assist in a comprehensive understanding of embodiments of the invention as defined by the claims and their equivalents. Those of ordinary skill in the art will recognize that various changes and modifications of the embodiments described herein can be made without departing from the scope and spirit of the invention. In addition, descriptions of well-known functions and constructions may be omitted for the sake of clarity and conciseness.

The terms and words used in the following description and claims are not limited to their dictionary meanings, but, are merely used to enable a clear and consistent understanding of the invention. Accordingly, it should be apparent to those skilled in the art that the following description of embodiments of the present invention is provided for illustration purposes only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Hereinafter, an electronic device for detecting the user's movement and recognizing at least one service device is referred to as a mobile terminal. An electronic device for providing contents to a service device is referred to as a contents source device. An electronic device for outputting the contents from the source device is referred to as a service device.

According to another embodiment of the present invention, the mobile terminal can include an avatar device, which can communicate with the mobile terminal and sends and receive control signals to and from the mobile terminal.

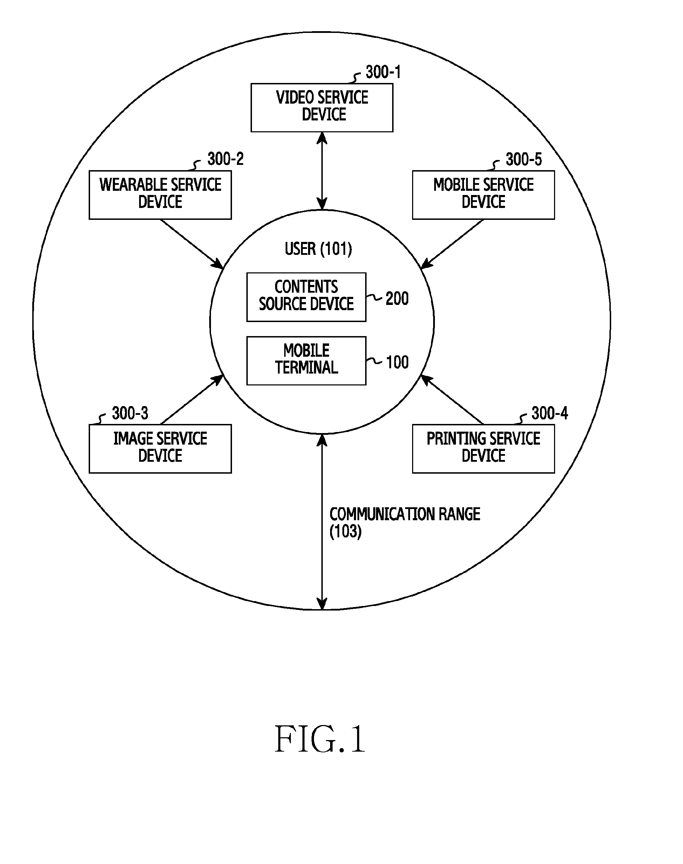

FIG. 1 illustrates a mobile terminal, a contents source device, and a service device according to an embodiment of the present invention.

Referring to FIG. 1, a user 101 can be serviced by at least one of a video service device 300-1, a wearable service device 300-2, an image service device 300-3, a printing service device 300-4, and a mobile service device 300-5 in a communication range 103 between a contents source device 200 and a mobile terminal 100 via the mobile terminal 100 according to characteristics of the service devices 300-1 through 300-5.

The mobile terminal 100 is capable of communicating with the contents source device 200 and the service devices 300-1 through 300-5. The mobile terminal 100 includes a communication means for communicating with the contents source device 200 and the service devices 300-1 through 300-5. The mobile terminal 100 is a portable electronic device such as a smart phone, a portable terminal, a mobile phone, a mobile pad, a media player, a tablet computer, a handheld computer, a Personal Digital Assistant (PDA), a wireless controller, and a wearable device, and can combine two or more functions of those devices.

The contents source device 200 communicates with the mobile terminal 100 and the service devices 300-1 through 300-5, and provides contents to be output by the service devices 300-1 through 300-5 to the mobile terminal 100 or the service devices 300-1 through 300-5 according to functions of the service devices 300-1 through 300-5. For example, the video service device 300-1 receives image information and audio information from the contents source device 200 and output contents including the image information and the audio information. The mobile terminal 100 mirrors the contents received from the contents source device 200, in the video service device 300-1. In the mirroring, the mobile terminal 100 simultaneously outputs the contents received from the contents source device 200 to at least one of the mobile terminal 100 and the service devices 300-1 through 300-5. Examples of the contents source device 200 include one of a smart phone, a portable terminal, a mobile phone, a mobile pad, a media player, a tablet computer, a handheld computer, a PDA, a desktop computer, a broadcasting station, and a broadcasting server, and a combination of two or more functions of those devices.

The service devices 300-1 through 300-5 communicate with the mobile terminal 100 and the contents source device 200 and provide at least one function corresponding to their device characteristics. For example, the video service device 300-1 outputs at least one of image content and audio content, and can include a smart Television (TV), a monitor, a speaker, a woofer, and a black box. The wearable service device 300-2 indicates a user wearable electronic device such as a watch-type terminal, a glass-type terminal, an electronic device attachable to clothes with communication functionality, an earring, and a bracelet. The image service device 300-3 provides an image service to the user, and includes a camera, a beam projector, and a Closed Circuit TV (CCTV). The printing service device 300-4 prints one or more documents including particular signs or objects, and includes a printer, a fax, and a 3-dimensions printer. The mobile service device 300-5 provides a mobile communication service, and includes a smart phone, a portable terminal, a mobile phone, a mobile pad, a media player, a tablet computer, a handheld computer, and a PDA.

The communications between the contents source device 200, the mobile terminal 100, and the service devices 300-1 through 300-5 can be established based on at least one of Bluetooth®, Bluetooth® Low Energy (BLE), Near Field Communication (NFC), Wireless Fidelity (Wi-Fi), Wireless Gigabit (WiGig), Zigbee®, Ultra Wideband (UWB), Infrared Data Association (IrDA), Visible Light Communication (VLC), Global System for Mobile communication (GSM), Enhanced Data GSM Environment (EDGE), Code Division Multiple Access (CDMA), and Long Term Evolution (LTE). While five service devices 300-1 through 300-5 are connected to the mobile terminal 100 and the contents source device 200 in FIG. 1, the number of the service devices can be greater than or less than five according to another embodiment of the present invention.

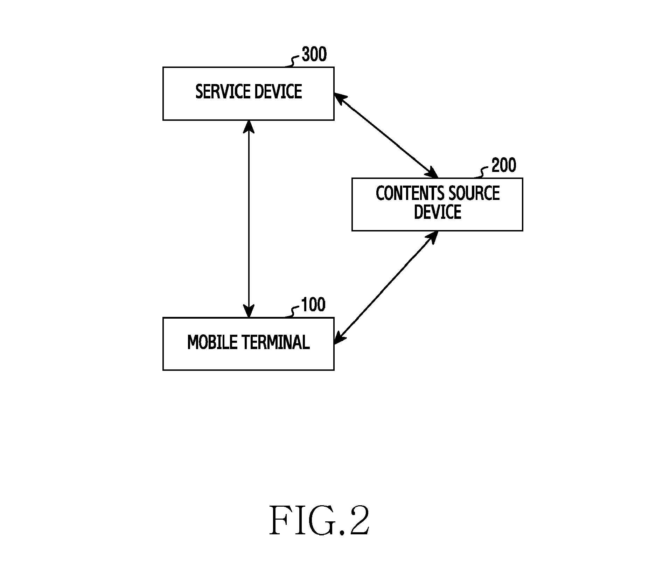

FIG. 2 illustrates a mobile terminal, a contents source device and a service device according to another embodiment of the present invention.

The mobile terminal 100 recognizes the service device 300. The mobile terminal 100 determines whether the service device 300 is at a controllable distance. For example, the service device 300 sends a preset signal to the mobile terminal 100. Hence, the mobile terminal 100 detects the preset signal and send a response to the service device 300.

The mobile terminal 100 and the contents source device 200 receive, from the service device 300, connectivity information of the service device 300, such as communication type information of the service device 300. The communication type includes at least one of Bluetooth®, BLE', Wi-Fi, WiGig, Zigbee®, UWB, IrDA, VLC, GSM, EDGE, CDMA, and LTE. The mobile terminal 100 and the contents source device 200 establish the communication with the service device 300 according to the connectivity information received from the service device 300.

The mobile terminal 100 sends a message requesting functionality information of the service device 300, which sends a response for the message requesting the functionality information from the mobile terminal 100. For example, when the service device 300 is a TV, the service device 300 sends to the mobile terminal 100 the functionality information indicating that the service device 300 can play an image and audio. The mobile terminal 100 outputs and mirrors the contents fed from the contents source device 200 in the service device 300. For example, when the contents source device 200 is a broadcasting server, the mobile terminal 100 is a smart phone, and the service device 300 is a smart TV, the mobile terminal 100 mirrors contents output from the contents source device 200 using a streaming service, in the service device 300. In the process, the mobile terminal 100 sends a signal of the functionality information received from the service device 300, to the service device 300. For example, when the service device 300 is an audio system, the mobile terminal 100 sends only an audio signal to the service device 300.

According to another embodiment of the present invention, the service device 300 sends its functionality information to the contents source device 200. The contents source device 200 sends, to the service device 300, contents including image information or audio information playable by the service device 300, according to the functionality information. For example, when the service device 200 is a TV and the contents source device 200 is a broadcasting station or a broadcasting server, the contents source device 200 sends contents received from the service device 300, to the service device 300 according to the functionality information of the service device 300. The service device 300 outputs the contents including the image information or the audio information received from the contents source device 200.

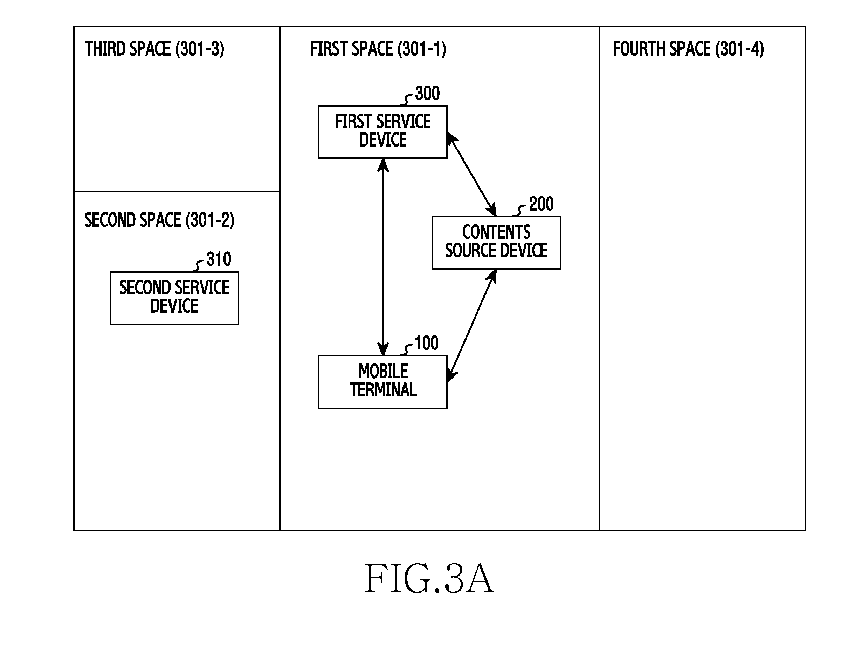

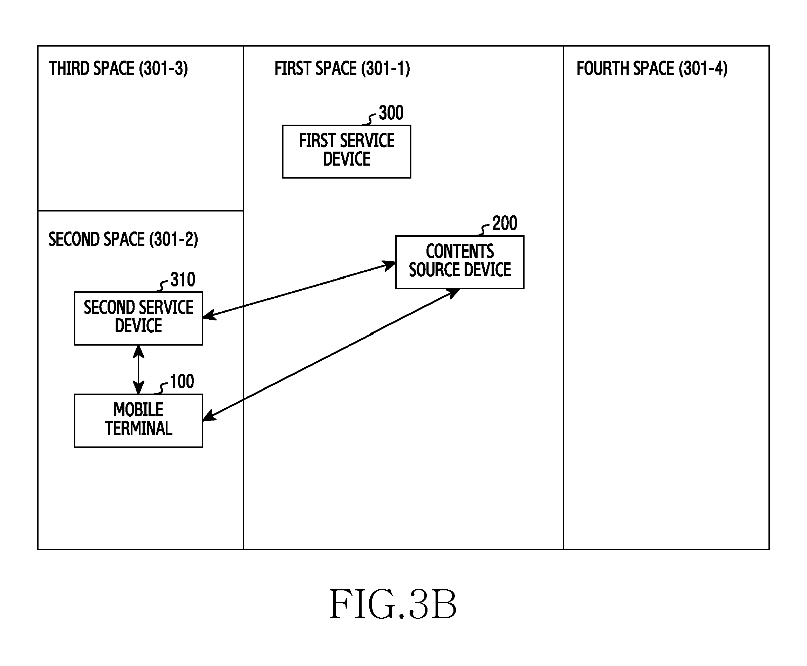

FIGs. 3A and 3B illustrate a service of a service device according to a movement of a mobile terminal according to an embodiment of the present invention.

Referring to FIG. 3A, the mobile terminal 100 in a first space 301-1 determines its movement based on Received Signal Strength Indication (RSSI) of a signal received from a first service device 300. The mobile terminal 100 calculates an average of the RSSI by continuously measuring the RSSI of the signal received from the first service device 300. When the average of the RSSI is exceeded, the mobile terminal 100 determines its movement. For example, when a difference between the RSSI and the RSSI average exceeds a threshold, the mobile terminal 100 determines its movement. Assuming that the mobile terminal 100 is a smart phone and the first service device 300 is a TV, when the user wears the mobile terminal 100 and watches a video using the first service device 300, the mobile terminal 100 continuously measures the RSSI of the signal received from the first service device 300 and thus calculates the RSSI average. When the user wearing the mobile terminal 100 moves, the RSSI can exceed or fall below its average, in which case the mobile terminal 100 determines its movement by mirroring contents received from the contents source device 200 in the first service device 300detects. The mobile terminal 100 stores content information at the time of the beginning of movement. For example, the mobile terminal 100 stores a play time, an audio volume, and an image resolution of the contents at the time the beginning of the movement of the mobile terminal 100.

Upon determining the end of the movement, the mobile terminal 100 sends a message requesting to terminate the service, to at least one of the contents source device 200 and the first service device 300. According to another embodiment of the present invention, the timing when the mobile terminal 100 sends the message requesting to terminate the service to the contents source device 200 and the first service device 300 can differ. For example, the mobile terminal 100 can send the message requesting to terminate the service immediately after the mobile terminal 100 determines its movement. Although the movement is determined, the mobile terminal 100 does not send the message requesting the service termination.

According to another embodiment of the present invention, upon determining the movement, the mobile terminal 100 sends a message indicating its movement to at least one of the contents source device 200 and the first service device 300. The first service device 300 receives the message indicating the movement of the mobile terminal 100 from the mobile terminal 100 and then stores content information played by the first service device 300. The content information can include at least one of the content play timing of the first service device 300, a resolution of the played image signal, audio signal volume, and content source information.

Referring to FIG. 3B, the mobile terminal 100 moves from first space 301-1 to second space 301-2, and recognizes a second service device 310 in second space 301-2. The mobile terminal 100 receives communication type information of the second service device 310 and forwards the communication type information to the contents source device 200. The mobile terminal 100 and the contents source device 200 establish a communication with the second service device 310 according to the communication type of the second service device 310.

The mobile terminal 100 receives functionality information of the second service device 310, from the second service device 310. For example, when the second service device 310 is a TV, the second service device 310 sends to the mobile terminal 100 information indicating that the second service device 310 can play an image and audio.

According to another embodiment of the present invention, the mobile terminal 100 sends, to the contents source device 200, at least one of the communication type information received from the second service device 310, the functionality information received from the second service device 310, and content information of the first service device 300. According to another embodiment of the present invention, the second service device 310 sends its functionality information to the contents source device 200.

The contents source device 200 sends contents including an image signal and an audio signal to the second service device 310 according to the functionality information of the second service device 310 and plays information of the first service device 300 received from the mobile terminal or the second service device 310. For example, upon determining the movement, the mobile terminal 100 requests the first service device 300 and the contents source device 200 to terminate the service, and stores the content information of the first service device 300. In the process, the contents source device 200 sends the contents such that the second service device 310 outputs the contents following the end of the content output of the first service device 300 according to the content information. That is, the contents source device 200 sends contents transmitted to the first service device 300, to the second service device 310 after the movement of the mobile terminal 100 from first space 301-1 to second space 301-2. When the mobile terminal 100, upon determining the movement, does not send the message requesting the service termination to at least one of the first service device 300 and the contents source device 200, the contents source device 200 provides the same contents as the first service device 300, to the second service device 310.

According to another embodiment of the present invention, even when the mobile terminal 100, after moving from one space to another space, does not send the message requesting the service termination to at least one of the first service device 300 and the contents source device 200, the contents source device 200 aborts the content delivery to the first service device 300 according to its own policy. For example, when the contents source device 200 is a content server for charged contents, the contents source device 200 provides the contents to the second service device 310 and does not provide the contents to the first service device 300 according to a traffic load.

According to another embodiment of the present invention, the first service device 300 sends its output content information to the contents source device 200. For example, the contents source device 200 receives, from the first service device 300, the content information output from the first service device 300, receives, from the mobile terminal 100, a message requesting to send the contents to the second service device 310, and sends the contents according to the content information to the second service device 310. For example, when the first service device 300 and the second service device 310 are TVs and the contents source device 200 is a broadcasting server, the contents source device 200 receives, from the first service device 300, content information output from the first service device 300, receives, from the mobile terminal 100, a message requesting to send the contents to the second service device 310, and sends the contents output from the first service device 300, to the second service device 310 according to the content information.

According to another embodiment of the present invention, the functionalities of the first service device 300 and the second service device 310 can differ from each other. For example, when the first service device 300 outputs an image signal and an audio signal and the second service device 310 outputs an audio signal, the mobile terminal 100 receives the functionality information of the second service device 310 from the second service device 310 and thus forwards the functionality information to the contents source device 200. The contents source device 200 sends contents to be output by the second service device 310 to the second service device 310 according to the functionality information and the content information. For example, the contents source device 200 provides the contents including the audio signal to the second service device 310.

In FIGS. 3A and 3B, the first service device 300 and the second service device 310 are placed in first space 301-1 and second space 301-2, respectively. According to another embodiment of the present invention, the number of spaces 301-1 through 301-4 can be less than three or greater than five. No service device or one or more service devices can be placed in spaces 301-1 through 301-4. The contents source device 200 can be placed in at least one of spaces 301-1 through 301-4, or in another space than spaces 301-1 through 301-4.

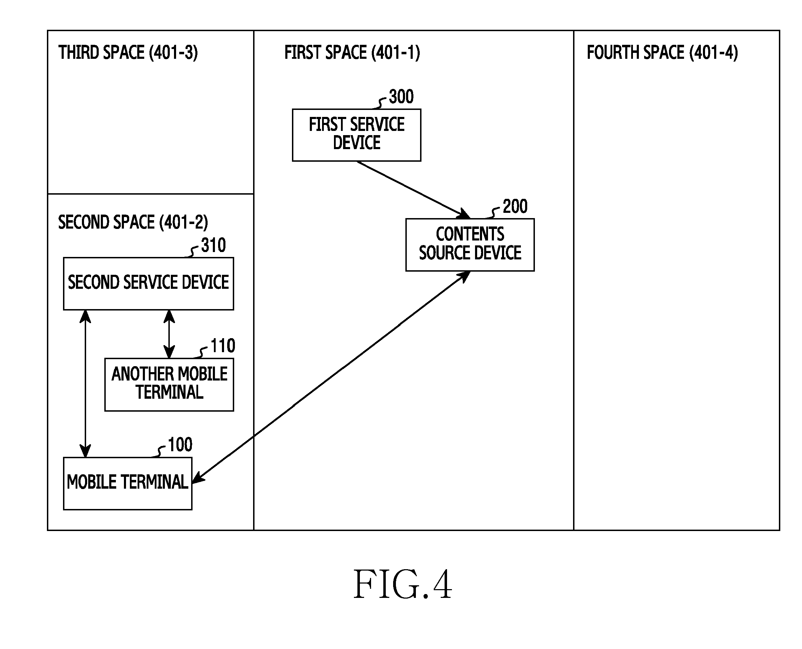

FIG. 4 illustrates a service of a service device according to a movement of a mobile terminal according to another embodiment of the present invention.

Referring to FIG. 4, the user of the mobile terminal 100 moves the mobile terminal 100 from a first space 401-1 to a second space 401-2. Another mobile terminal 110 mirrors contents of the second service device 310 in second space 401-2. The second service device 310 sends a message indicating whether the second service device 310 is available, to the mobile terminal 100. For example, the message indicating whether the second service device 310 is available depends on whether another user occupies the second service device. The second service device 310 determines the availability based on whether it receives a signal for mirroring the contents from another mobile terminal 110. For example, when receiving the signal for mirroring the contents from another mobile terminal 110, the second service device 310 sends to the mobile terminal 100 a message indicating that service at the second service device 310 is unavailable (i.e., out-of-service). By contrast, when the signal for mirroring the contents is not received from another mobile terminal 110, the second service device 310 sends to the mobile terminal 100 a message indicating that service is available at the second service device 310.

When mirroring the signal for mirroring the contents received from the contents source device 200, in the first service device 300, the mobile terminal 100 receives the message indicating the out-of-service from the second service device 310. In the process, the mobile terminal 100 does not mirror the signal for mirroring the contents in the second service device 310. That is, when the contents source device 200 is a broadcasting station or a broadcasting server, the mobile terminal 100 does not send to the contents source device 200 a message requesting to send the contents for the first service device 300 to the second service device 310.

The mobile terminal 100 sends the signal for mirroring the contents to the second service device 310 only when the second service device 310 does not receive the signal for mirroring the contents from another mobile terminal 110.

That is, the mobile terminal 100 sends, to the contents source device 200, the message requesting to send the content signal to the second service device 310 only when another mobile terminal 110 is not using the second service device 310. The mobile terminal 100 does not send a message requesting service termination to at least one of the contents source device 200 and the first service device 300.

In FIG. 4, the first service device 300 is placed in first space 401-1 and the second service device 310 is placed in second space 401-2 individually. According to another embodiment of the present invention, the number of spaces 401-1 through 401-4 can be less than three or greater than five. No service device or one or more service devices can be placed in spaces 401-1 through 401-4. The contents source device 200 can be placed in at least one of spaces 401-1 through 401-4, or in another space than spaces 401-1 through 401-4.

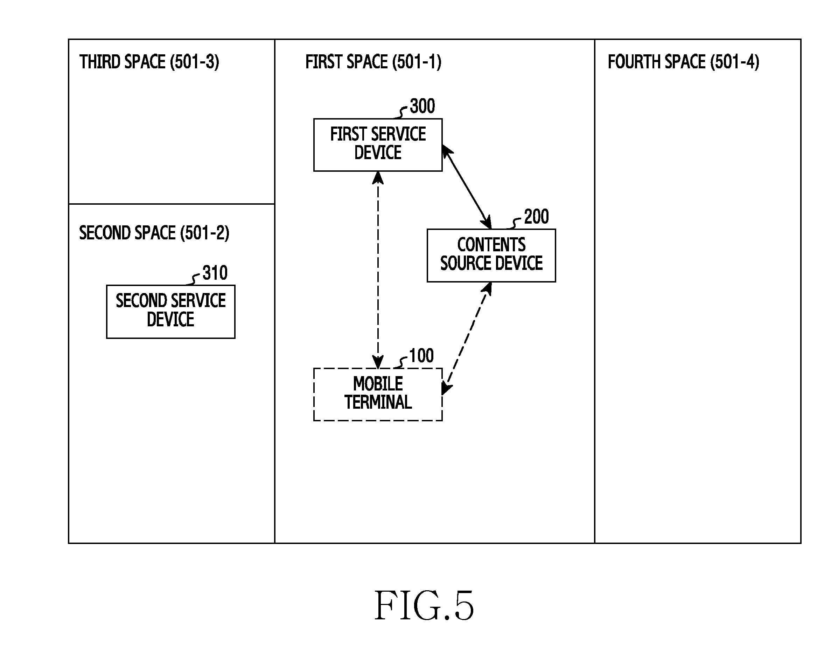

FIG. 5 illustrates a service of a service device according to a movement of a mobile terminal according to another embodiment of the present invention.

Referring to FIG. 5, when the mobile terminal 100 moves to another space than a first space 501-1, the first service device 300 stores content information output from the first service device 300. The mobile terminal 100 determines its movement to the other space than first space 501-1 by measuring the RSSI. The mobile terminal 100 sends a message indicating its movement, to at least one of the first service device 300 and a contents source device 200. For example, when the first service device 300 is a TV, the first service device 300 receiving the message stores the content information including at least one of resolution, audio volume, and play time of a content image played by the first service device 300. Upon determining the movement to the other space than first space 501-1, the mobile terminal 100 sends a message requesting the service termination, to at least one of a contents source device 200 and the first service device 300. Alternatively, upon determining the movement to the other space than first space 501-1, the mobile terminal 100 does not send the message requesting the service termination to the contents source device 200.

After sending the message requesting the service termination to the contents source device 200 and the first service device 300, the mobile terminal 100 returns to first space 501-1. In this case, the first service device 300 recognizes the mobile terminal 100 returning to first space 501- based on the RSSI from the mobile terminal 100, and sends a message requesting to resume the existing content delivery to the contents source device 200 so as to continue the existing content output when the mobile terminal 100 is placed in first space 501-1. Alternatively, the mobile terminal 100 sends a message requesting to resume the existing content delivery to the contents source device 200.

In FIG. 5, the first service device 300 is placed in first space 501-1 and the second service device 310 is placed in second space 501-2 individually. Alternatively, the number of the spaces 501-1 through 501-4 can be less than three or greater than five. No service device or one or more service devices can be placed in spaces 501-1 through 501-4. The contents source device 200 can be placed in at least one of spaces 501-1 through 501-4, or in another space than spaces 501-1 through 501-4.

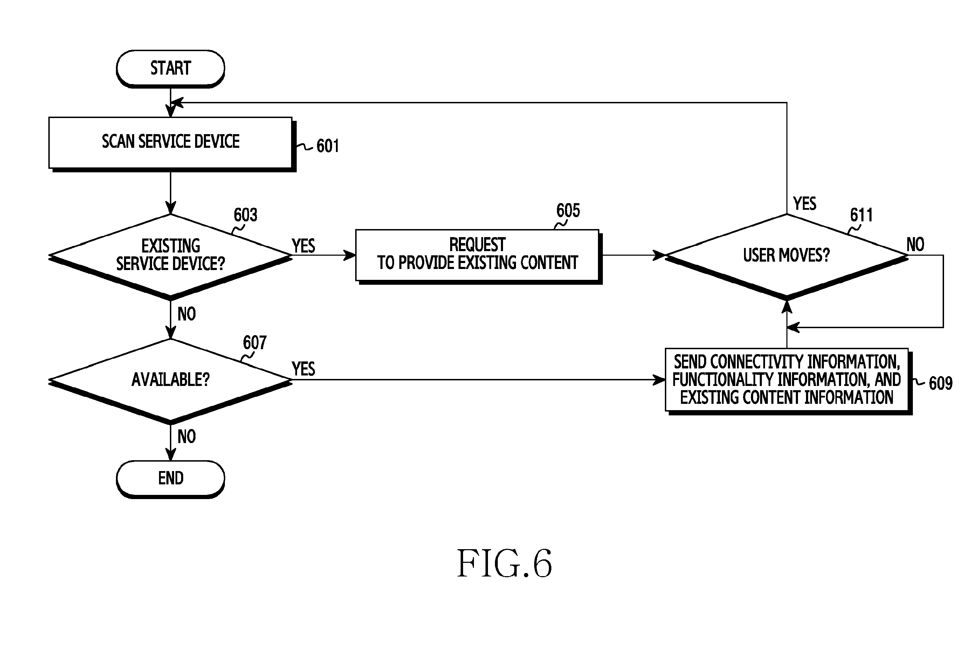

FIG. 6 is a flowchart of a method of a mobile terminal according to an embodiment of the present invention.

Referring to FIG. 6, the mobile terminal 100 scans a service device 300 in step 601. The mobile terminal 100 and the service device 300 exchange preset signals. The mobile terminal 100 recognizes the service device 300 by sending and receiving the preset signals. The mobile terminal 100 receives connectivity information and functionality information of the service device 300, from the service device 300. The mobile terminal 100 obtains communication type information of the service device 300 based on the connectivity information. The communication type includes at least one of Bluetooth®, BLE, NFC, Wi-Fi, WiGig, Zigbee®, UWB, IrDA, VLC, GSM, EDGE, CDMA, and LTE. The functionality information indicates a function according to characteristics of the service device 300. For example, when the service device 300 is a TV, the functionality information includes image output and audio output information. When the service device 300 is a speaker, the functionality information includes audio output information. The mobile terminal 100 receives a message indicating whether another mobile terminal is using the service device 300, from the service device 300.

In step 603, the mobile terminal 100 determines whether the scanned service device 300 provides the existing service device or another service device. When determining the existing service device, the mobile terminal 100 sends, to the contents source device 200, a message requesting to send the existing contents to the scanned service device 300 in step 605. When determining that the service device 300 is another service device, the mobile terminal 100 determines whether the another service device scanned is available in step 607.

In step 605, the mobile terminal 100 sends, to the contents source device 200, a message requesting to send the existing contents to the scanned existing service device. In step 607, the mobile terminal 100 determines whether the scanned service device 300 is available. The mobile terminal 100 receives, from the service device 300, the connectivity information and the functionality information of the service device 300 and the message indicating whether another user is using the service device 300. The mobile terminal 100 determines whether the service device 300 is available, based on at least one of the connectivity information and the functionality information of the service device 300 and the message indicating whether another user is using the service device 300, which are received from the service device 300.

For example, the mobile terminal 100 determines that the service device 300 is unavailable (i.e., out- of- service) and terminates the operation in at least one of when the communication type of the service device is different from that of the contents source device 200 for sending the signal to the service device 300, a the service device 300 cannot output the contents received from the contents source device 200, and another user is using the service device 200. The mobile terminal 100 determines that the service device 300 is available when the communication type of the service device 300 is compatible with the communication type of the contents source device 200, when the service device 300 is able to output the contents received from the contents source device 200, and when another user is not using the service device 300.

In step 609, the mobile terminal 100 sends, to the contents source device 200, the connectivity information of the service device 300, the functionality information of the service device 300, and the existing content information. The mobile terminal 100 sends the connectivity information and the functionality information of the service device 300 to the contents source device 200 so that the contents source device 200 establishes the communication according to the connectivity information of the service device 300 and outputs the service of the service device 300 according to the functionality information.

According to another embodiment of the present invention, the mobile terminal 100 mirrors contents mirrored in the existing service device, in the service device 300. For example, the mobile terminal 100 mirrors the contents to be output by the service device 300, in the service device 300 according to the functionality information of the service device 300. When the service device 300 is a TV, the mobile terminal 100 mirrors an image signal and an audio signal. When the service device 300 is an audio system, the mobile terminal 100 mirrors an audio signal.

In step 611, the mobile terminal 100 determines whether the user carrying the mobile terminal 100 moves by measuring the RSSI with the service device. The mobile terminal 100 calculates the average RSSI by measuring the RSSI with the service device 300. When the RSSI differs from the average RSSI, the mobile terminal 100 determines the user movement, and sends a message indicating the user movement to at least one of the service device and the contents source device 200.

Referring to FIG. 6, the mobile terminal 100 stores content information mirrored in the service device 300. The content information relates to the contents mirrored by the mobile terminal 100 in the service device 300. For example, the content information can include at least one of the resolution, the audio volume, and the play time of the content image. According to another embodiment of the present invention, upon determining the user movement, the mobile terminal 100 sends a message requesting the service termination, to at least one of the contents source device 200 and the service device 300. When determining that the user moves out of the space of the service device 300, the mobile terminal 100 returns to step 601 and scans another service device. When determining that the user does not move out of the space of the service device 300, the mobile terminal 100 re-determines whether the user moves out of the space by performing step 611 again.

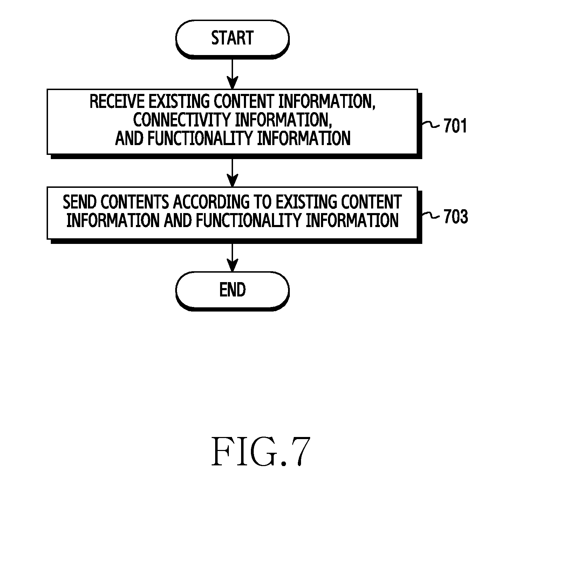

FIG. 7 is a flowchart of a method of a source device according to an embodiment of the present invention.

In step 701, the contents source device 200 receives connectivity information and functionality information of a service device 300 recognized by a mobile terminal 100, from the mobile terminal 100. The contents source device 200 establishes communication with the service device 300 using the same communication type as the service device 300, based on the connectivity information. The contents source device 200 receives existing content information from the mobile terminal 100. The existing content information, which indicates information relating to contents output by the existing service device connected to the mobile terminal 100,includes at least one of resolution, audio volume, and play time of the content image. The service device 300 can be different from the existing service device. According to another embodiment of the present invention, the service device 300 can be the existing service device.

In step 703, the contents source device 200 sends contents according to at least one of the existing content information and the service device functionality, to the service device 300. The contents source device 200 sends contents to be output by the service device 300, to the service device 300 according to the functionality information of the service device 300. The contents source device 200 sends contents so that the service device 300 can resume the existing content delivery according to the existing content information and the functionality information.

According to another embodiment of the present invention, the contents source device 200 receives from the mobile terminal 100 a message requesting to terminate the content delivery to the service device 300. When determining that the mobile terminal 100 leaves the space of the service device 300, the mobile terminal 100 sends the message requesting to terminate the content delivery to the contents source device 200. According to another embodiment of the present invention, the contents source device 200 receives a message indicating movement of the mobile terminal 100, from the mobile terminal 100.

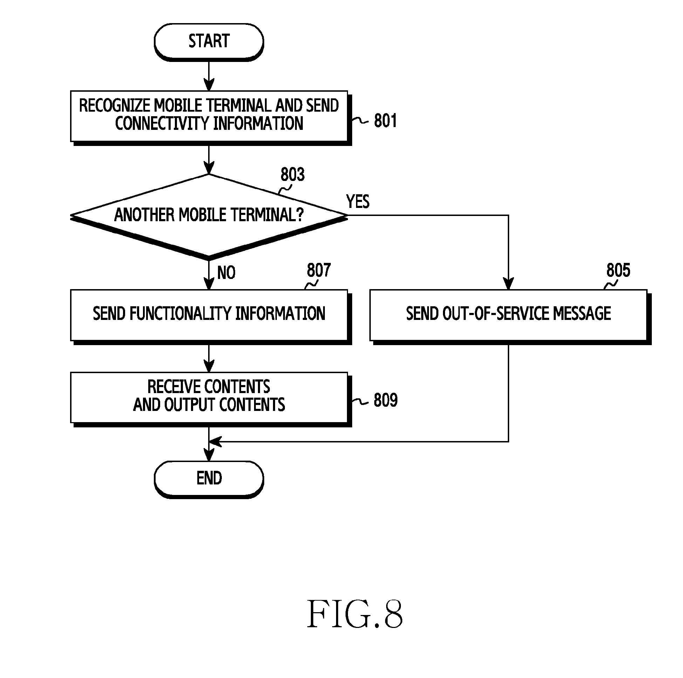

FIG. 8 is a flowchart of a method of a service device according to an embodiment of the present invention.

In step 801, the service device 300 recognizes the mobile terminal 100 by exchanging preset signals with the mobile terminal 100. The service device 300 sends its connectivity information to the mobile terminal 100. The connectivity information pertains to the communication type of the service device 300, including at least one of Bluetooth®, BLE, NFC, Wi-Fi, WiGig, Zigbee®, UWB, IrDA, VLC, GSM, EDGE, CDMA, and LTE. According to another embodiment of the present invention, the service device sends the connectivity information to the contents source device 200.

In step 803, the service device 300 determines whether another user is using the service device 300. When another user is using the service device 300, the service device 300 sends an out-of-service message to the mobile terminal 100 in step 805, indicating to the mobile terminal 100 whether another user is using the service device 300.

When another user is not using the service device 300, the service device 300 sends its functionality information to the mobile terminal 100 in step 807. According to another embodiment of the present invention, the service device 300 sends the functionality information to the contents source device 200. The functionality information indicates the function according to characteristics of the service device 300. For example, when the service device 300 is a TV, the functionality information includes image output and audio output information. When the service device 300 is a speaker, the functionality information includes audio output information. According to another embodiment of the present invention, the service device 300 receives the existing content information from the mobile terminal 100 and thus sends, to the source device 300, a message requesting to send contents according to the existing content information.

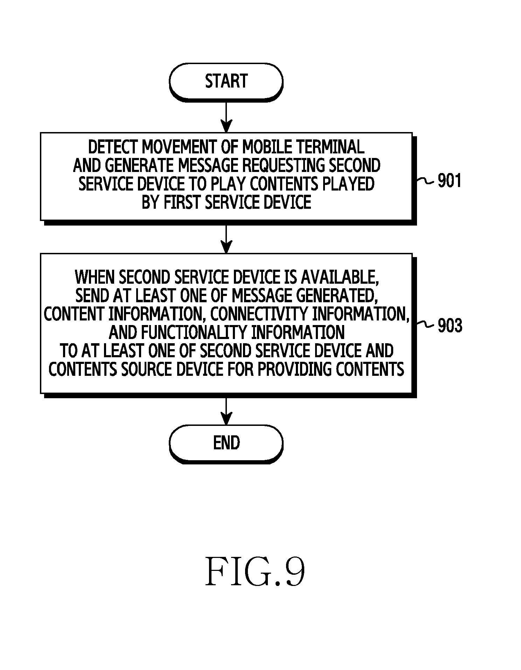

In step 809, the service device 300 receives a content signal to be output by the service device 300, from the contents source device 200. The service device 300 outputs the contents according to the existing content information from the contents source device 200. According to another embodiment of the present invention, the service device 300 outputs a content signal mirrored by the mobile terminal 100. FIG. 9 is a flowchart of a method of a mobile terminal according to another embodiment of the present invention.

Referring to FIG. 9, the first service device detects movement of the mobile terminal 100 in step 901 detects and thus generates a message requesting a second service device to play contents being played by the first service device. The mobile terminal 100 receives a signal for recognizing the first service device, from the first service device. The mobile terminal 100 measures the RSSI from the first service device, determines the RSSI average, and determines its movement when a difference of the RSSI and the determined RSSI average exceeds a threshold. Upon determining the movement, the mobile terminal 100 stores content information played by the first service device. The mobile terminal 100 detects a signal for recognizing a second service device, sends a message requesting at least one of the connectivity information and the functionality information to the second service device, and receives at least one of the connectivity information and the functionality information from the second service device. The mobile terminal 100 sends, to the second service device, a message requesting the second service device to send a message indicating whether the second service device is available.

According to another embodiment of the present invention, the first service device and the second service device are identical.

In step 903, when the second service device is available, the first service device sends at least one of the generated message, content information, connectivity information, and functionality information to the second service device or a contents source for providing the contents. The content information includes at least one of source information, image information, audio information, and play time information of the contents output from the first service device. The connectivity information includes the communication type information of the second service device. The functionality information includes the function information of the second service device.

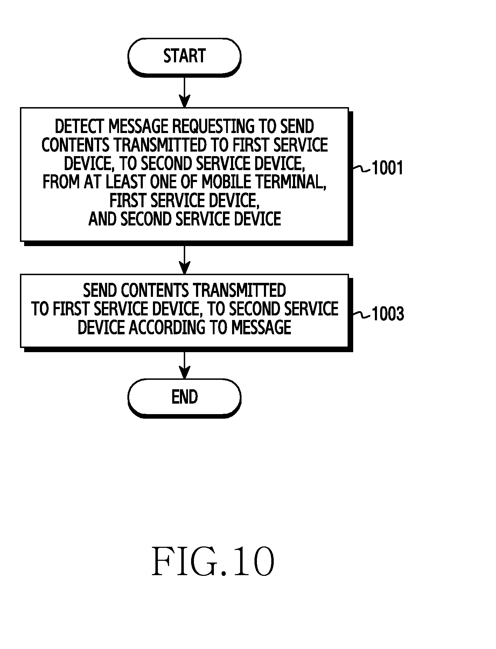

FIG. 10 is a flowchart of a method of a contents source device 200 according to another embodiment of the present invention.

Referring to FIG. 10, the contents source device 200 detects a message requesting the contents source device 200 to send contents transmitted to a first service device, to a second service device 310 in step 1001. The contents source device 200 receives at least one of content signal information transmitted to the first service device 300, connectivity information of the first service device 300, functionality information of the first service device 300, connectivity information of the second service device 310, and functionality information of the second service device 310, from at least one of the mobile terminal 100, the first service device 300, and the second service device 310.

The content information includes at least one of source information, image information, audio information, and play time information of the contents output from the first service device 300. The connectivity information of the first service device 300 includes the communication type information of the first service device 300. The connectivity information of the second service device 310 includes the communication type information of the second service device 310. The functionality information of the first service device 300 includes the function information of the first service device 300. The functionality information of the second service device 310 includes the function information of the second service device 310.

In step 1003, the contents source device 200 sends the content signal transmitted to the first service device 300, to the second service device 310 according to the message from the mobile terminal 100 or the second service device 310.

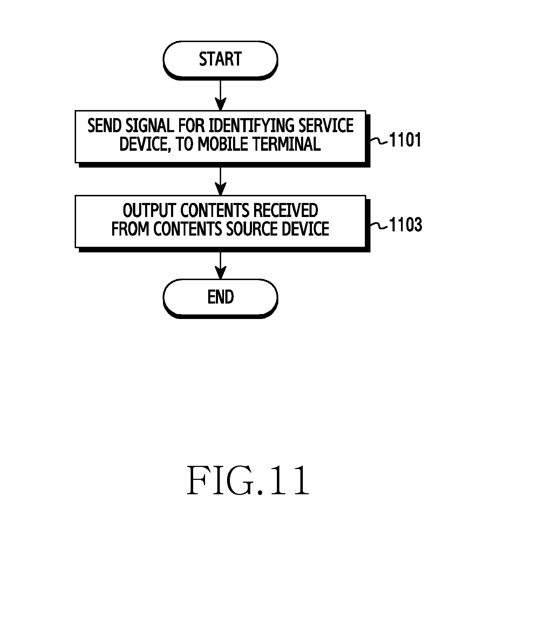

FIG. 11 is a flowchart of a method of a service device according to another embodiment of the present invention.

Referring to FIG. 11, in step 1101, the service device 300 sends a signal for identifying the service device 300 to the mobile device 100. The service device 300 receives a message requesting the service device 300 to send at least one of a message indicating whether the service device 300 is available, the connectivity information of the service device 300, and the functionality information of the service device 300. The service device 300 generates and sends at least one of the message indicating whether the service device 300 is available, its connectivity information, and its functionality information.

In step 1103, the service device 300 outputs at least one of a content signal received from the contents source device 200 and a content signal mirrored from the mobile terminal 100. The service device 300 receives a content signal from the contents source device 200 and outputs the contents.

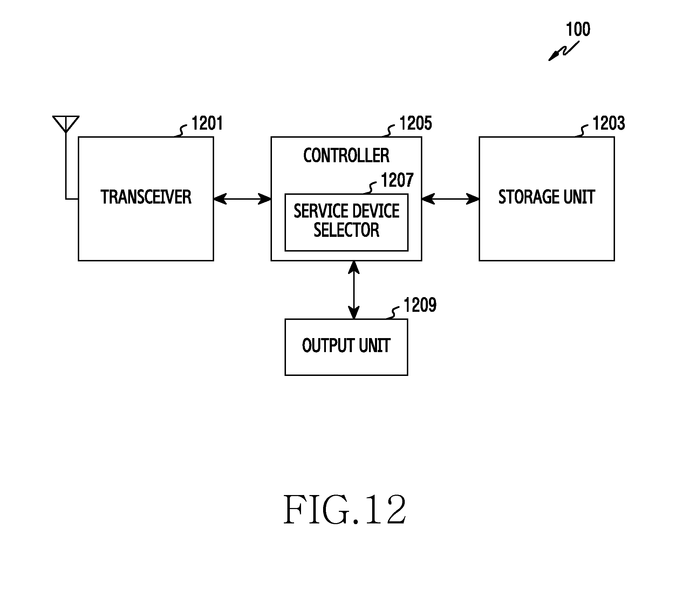

FIG. 12 is a block diagram of a mobile terminal 100 according to an embodiment of the present invention.

Referring to FIG. 12, the mobile terminal 100 includes a transceiver 1201, a storage unit 1203, a controller 1205, a service device selector 1207, and an output unit 1209.

The transceiver 1201 processes to send and receive radio signals of data which are input and output via an antenna. For example, for transmission, the transceiver 1201 channel-encodes data to send, and Radio Frequency (RF)-processes and transmits the encoded data. For reception, the transceiver 1201 converts a received RF signal to a baseband signal and restores data by channel-decoding the baseband signal. In addition to the conventional functions, when the second service device is available, the transceiver 1201 sends at least one of the generated message, the content information, the connectivity information, and the functionality information to at least one of the second service device and the contents source device which provides the contents. The transceiver 1201 receives the signal for recognizing the first service device from the first service device. The transceiver 1201 requests the second service device 310 to send the message indicating whether the second service device 310 is available, and receives the message indicating whether the second service device 310 is available from the second service device 310. The content information includes at least one of image information, audio information, and play time information of the contents output from the first service device. The connectivity information includes the communication type information of the second service device. The functionality information of the second service device 310 includes the function information of the second service device 310. According to another embodiment of the present invention, the transceiver 1201 can be divided into a separate transmitter and receiver.

The storage unit 1203 stores microcode and reference data of a program for the processing and the controlling of the controller 1205. In particular, the storage unit 1203 stores at least one of content information, connectivity information, and functionality information. The storage unit 1203 stores the content information mirrored in the first service device 300.

The controller 1205 controls operations of the control device. For example, the controller 1205 processes and controls voice communication and data communication. In addition to the conventional functions, the controller 1205 detects the movement of the mobile terminal 100 and thus generates the message requesting the second service device 310 to play the contents being played by the first service device 300. The controller 1205 measures the RSSI from the first service device 300, determines the RSSI average, and determines the movement of the mobile terminal 100 when the difference of the RSSI and the determined RSSI average exceeds the threshold. Upon determining the movement of the mobile terminal 100, the controller 1205 controls to store the content signal information mirrored in the first service device 300. The controller 1205 detects the signal for recognizing the second service device 310, from the second service device 310.

The output unit 1209 can include at least one of a touch screen for providing an input/output interface between the electronic device and the user, an audio output part for outputting an audio signal, and a printing part for outputting a document or an object. The output unit 1209 can be divided into the touch screen, the audio output part, and the printing part. The output unit 1209 provides an interface for user's touch input/output, and can be a medium for forwarding the user's touch input to the electronic device and displaying an output from the electronic device to the user. The output unit 1209 provides a visual output to the user. For example, the output unit 1209 outputs an image of a device recognized by a camera of the electronic device. The visual output can include a text, a graphic, a video, and a combination thereof. The output unit 1209 can employ various display technologies, such as a Liquid Crystal Display (LCD), a Light Emitting Diode (LED), a Light emitting Polymer Display (LPD), an Organic LED (OLED), an Active Matrix OLED (AMOLED), and a Flexible LED (FLED). The touch screen of the output unit 1209 is not limited to the touch screen using the display technologies. The touch screen can be divided into a screen display part and an input part.

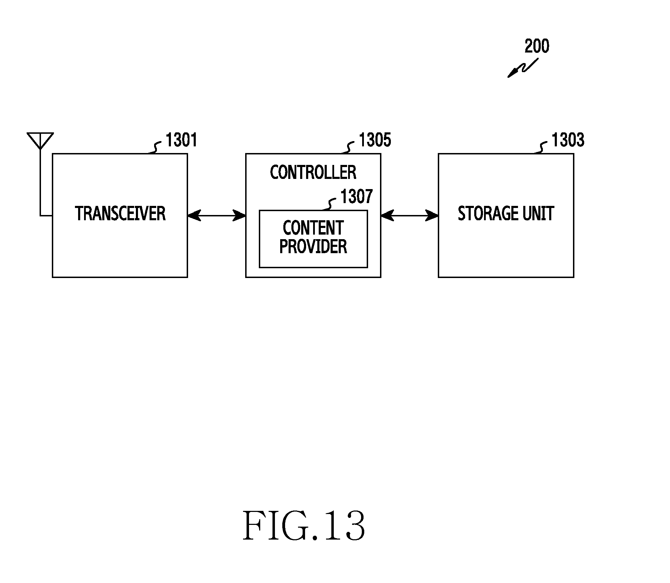

FIG. 13 is a block diagram of a contents source device 200 according to an embodiment of the present invention.

Referring to FIG. 13, the contents source device 200 includes a transceiver 1301, a storage unit 1303, a controller 1305, and a content provider 1307.

The transceiver 1301 processes to send and receive radio signals of data which are input and output via an antenna. For example, for transmission, the transceiver 1301 channel-encodes data to send, and RF-processes and transmits the encoded data. For reception, the transceiver 1301 converts a received RF signal to a baseband signal and restores data by channel-decoding the baseband signal. In addition to the conventional functions, according to the message from at least one of the mobile terminal 100, first service device 300 and second service device 310 requesting the content source device 200 to send the content signal transmitted to the first service device, to the second service device, the transceiver 1301 sends, to the second service device, the content signal transmitted to the first service device. The transceiver 1301 receives at least one of the content signal information transmitted to the first service device, the connectivity information of the second service device, and the functionality information of the second service device, from at least one of the mobile terminal, the first service device, and the second service device. The transceiver 1301 establishes the connection with the second service device according to the connectivity information of the second service device. The transceiver 1301 sends the content signal to be output by the second service device to the second service device according to the functionality information of the second service device.

The content signal information includes at least one of image information, audio information, and play time information of the contents transmitted to the first service device. The connectivity information of the second service device includes the communication type information of the second service device. The functionality information of the second service device includes the function information of the second service device.

The storage unit 1303 stores microcodes and reference data of a program for processing and controlling the controller 1305. In particular, the storage unit 1303 stores content signal information, connectivity information of the second service device 310, and functionality information of the second service device 310.

The controller 1305 controls operations the contents source device 200. For example, the controller 1305 processes and controls voice communication and data communication. In addition to the conventional functions, the controller 1305 detects the message requesting the contents server 200 to send the contents transmitted to the first service device 300, to the second service device 310 from at least one of the mobile terminal 100, the first service device 300, and the second service device 310.

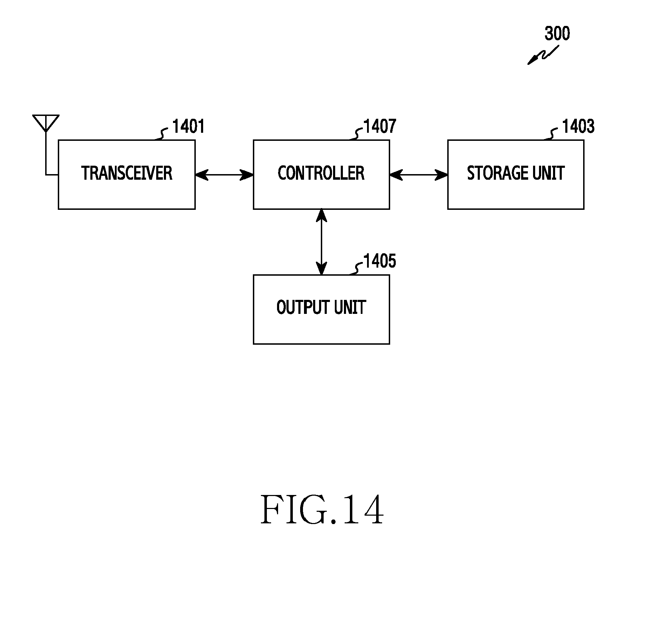

FIG. 14 is a block diagram of a service device 300 according to an embodiment of the present invention.

Referring to FIG. 14, the service device 300 includes a transceiver 1401, a storage unit 1403, an output unit 1405, and a controller 1407.

The transceiver 1401 processes to send and receive radio signals of data which are input and output via an antenna. For example, for transmission, the transceiver 1401 channel-encodes data to send, and RF-processes and transmits the encoded data. For reception, the transceiver 1401 converts a received RF signal to a baseband signal and restores data by channel-decoding the baseband signal. In addition to the conventional functions, the transceiver 1401 sends the signal for recognizing the electronic device, to the mobile terminal. 100 The transceiver 1401 receives the signal for recognizing the mobile terminal 100, from the mobile terminal 100. The transceiver 1401 receives the message requesting the service device 300 to send the message indicating whether the service device 300 is available, from the mobile terminal 100 and sends the message indicating whether the service device 300 is available, to the mobile terminal 100. The transceiver 1401 receives from the mobile terminal 100 the message requesting to send at least one of content information played by the service device 300, connectivity information of the service device 300, and functionality information of the service device 300, and sends at least one of the connectivity information of the service device 300 and the functionality information of the service device 300 to the mobile terminal 100. The transceiver 1401 receives the message indicating the movement of the mobile terminal 100 from the mobile terminal 100.

The content information includes at least one of source information, image information, audio information, and play time information of the contents played by the service device 300. The connectivity information includes the communication type information of the service device 300. The functionality information includes the function information of the service device 300.

According to another embodiment of the present invention, the transceiver 1401 can be divided into a separate transmitter and receiver.

The storage unit 1403 stores micro codes and reference data of a program for processing and controlling the controller 1407. In particular, the storage unit 1403 stores at least one of service information, connectivity information, functionality information, and the contents.

The output unit 1405 includes at least one of a touch screen for providing an input/output interface between the service device 300 and the user, an audio output unit for outputting an audio signal, and a printing part for outputting a document or an object. The output unit 1405 can be divided into the touch screen, the audio output unit, and the printing unit. The output unit 1405 provides an interface for user's touch input/output. More specifically, the output unit 1405 can be a medium for forwarding the user's touch input to the service device 300 and displaying an output from the service device 300 to the user. The output unit 1405 provides a visual output to the user, such as outputting an image of a device recognized by a camera of the service device 300. The visual output can include a text, a graphic, a video, and a combination thereon. The output unit 1405 can employ various display technologies, such as LCD, LED, LPD, OLED, AMOLED, and FLED. The touch screen of the output unit 1405 is not limited to the touch screen using the display technologies. The touch screen can be divided into a screen display unit and an input unit. In addition to the conventional functions, the output unit 1405 outputs at least one of the content signal received from the contents source device 200 and the content signal mirrored from the mobile terminal 100. The output unit 1405 outputs the audio signal at a first time and then outputs the image signal after a later time than the first time, and output the image signal at a second time and then output the audio signal after a later time than the second time.

The controller 1407 controls operations of the electronic device. For example, the controller 1407 processes and controls voice communication and data communication. In addition to the conventional functions, the controller 1407 generates the message indicating whether the service device 300 is available according to the output of at least one of the content signal received from the contents source device 200, the content signal received from the broadcasting station transmitter, and the mirrored content signal from the mobile terminal 100. The controller 1407 controls to set at least one of the first time, the second time, and the later time according to a user's command. The controller 1407 controls to store the content information being played. The controller 1407 determines whether to receive the content signal according to at least one of the traffic load of the contents source device 300 and the charged content service.

The methods described in the claims and/or the specification of the present invention can be implemented using hardware and software alone or in combination thereof.

As for the software, a computer-readable storage medium including one or more programs and/or software modules can be provided. One or more programs stored to the non-transitory computer-readable storage medium are configured for execution of one or more processors of the electronic device. One or more programs include instructions making the electronic device execute the methods according to the various embodiments as described in the claims and/or the specification of the present invention.

While the invention has been shown and described with reference to certain embodiments thereof, it will be understood by those skilled in the art that various changes in form and details may be made therein without departing from the spirit and scope of the invention as defined by the appended claims and their equivalents.

## Claims

1. A mobile terminal comprising:
a controller configured to detect a movement of the mobile terminal and generating a message requesting a second service device to play contents being played by a first service device according to a movement of the mobile terminal; and
a transceiver configured to send, if the second service device is available, the generated message to a contents source device which provides the contents.

2. The mobile terminal of claim 1, wherein the transceiver is further configured to receive a signal for recognizing the first service device, from the first service device, and request the second service device to send a message indicating whether the second service device is available, and receive, from the second service device, the message indicating whether the second service device is available, and send, if the second service device is available, at least one of content information, connectivity information, and functionality information to the contents source device.

3. The mobile terminal of claim 1, wherein the controller is further configured to measure a Received Signal Strength Indication (RSSI) from the first service device, and determine an average of the RSSI, and determine that the mobile terminal moves if a difference between the RSSI and the determined RSSI average exceeds a threshold, and store, if determining that the mobile terminal moves, content signal information mirrored in the first service device.

4. The mobile terminal of claim 1, wherein the transceiver is further configured to receive at least one of content information, connectivity information, and functionality information from the second service device, and send a message requesting service termination to at least one of the first service device and the contents source device,
wherein the content signal information comprises at least one of image information, audio information, and play time information of contents output from the first service device,
the connectivity information comprises communication type information of the second service device, and
the functionality information comprises function information of the second service device.

5. A contents source device comprising:
a controller configured to detect a message requesting the contents source device to send, to a second service device, a content signal transmitted to a first service device, from at least one of a mobile terminal, the first service device, and the second service device according to a movement of the mobile terminal; and
a transceiver configured to send contents transmitted to the first service device, to the second service device according to the message.

6. The contents source device of claim 5, wherein the transceiver is further configured to receive at least one of content signal information transmitted to the first service device, connectivity information of the second service device, and functionality information of the second service device, from at least one of the mobile terminal, the first service device, and the second service device,
wherein the content information comprises at least one of image information, audio information, and play time information of contents transmitted to the first service device,
the connectivity information of the second service device comprises communication type information of the second service device, and
the functionality information of the second service device comprises function information of the second service device.

7. The contents source device of claim 5, wherein the transceiver is further configured to establish a connection with the second service device according to connectivity information of the second service device; and send, to the second service device, contents to be output by the second service device, according to functionality information of the second service device.

8. The contents source device of claim 5, wherein the transceiver is further configured to receive a message requesting service termination, from the mobile terminal.

9. A service device comprising:
a transceiver configured to send, to a mobile terminal, a signal for recognizing the service device; and
a output unit configured to output at least one of a content signal received from a contents source device and a content signal mirrored from the mobile terminal according to a movement of the mobile terminal.

10. The service device of claim 9, wherein the controller is further configured to generate a message indicating whether the service device is available according to an output of at least one of a content signal received from the contents source device, a content signal received from a broadcasting station transmitter, and a content signal mirrored from the mobile terminal, and
wherein the transceiver is further configured to receive a message for recognizing the mobile terminal, from the mobile terminal, and receive, from the mobile terminal, a message requesting the service device to send a message indicating whether the service device is available; and send, to the mobile terminal, a message indicating whether the service device is available.

11. The service device of claim 9, wherein the transceiver is further configured to receive, from the mobile terminal, a message requesting the service device to send at least one of content information played by the service device, connectivity information of the service device, and functionality information of the service device; and send at least one of the connectivity information of the service device and the functionality information of the service device to the mobile terminal, and receive a message indicating a movement of the mobile terminal from the mobile terminal; and
wherein the controller is further configured to control storing of played content information,
wherein the content information comprises at least one of source information, image information, audio information, and play time information of contents played by the service device,
the connectivity information comprises communication type information of the service device, and
the functionality information comprises function information of the service device.

12. The service device of claim 9, wherein the controller is further configured to determining whether to receive the content signal according to at least one of a traffic load of the contents source device and charging of the contents, and
wherein the transceiver is further configured to receive a message requesting service termination from the mobile terminal; and
wherein an audio signal is output at a first time and then an image signal is output after a later time than the first time, and an image signal is output at a second time and then an audio signal is output after a later time than the second time;
wherein at least one of the first time, the second time, the later time than the first time and the later time than the second time is set by a user.

13. A method for operating a mobile terminal, comprising:
detecting a movement of the mobile terminal and generating a message requesting a second service device to play contents being played by a first service device according to a movement of the mobile terminal; and
sending, if the second service device is available, the generated message to a contents source device which provides the contents.

14. A method for operating a contents source device, comprising:
receiving a message requesting the contents source device to send, to a second service device, a content signal transmitted to a first service device, from at least one of a mobile terminal, the first service device, and the second service device according to a movement of the mobile terminal; and
sending contents transmitted to the first service device, to the second service device according to the message.

15. A method for operating a service device, comprising:
sending, to a mobile terminal, a signal for recognizing the service device; and
outputting at least one of a content signal received from a contents source device and a content signal mirrored from the mobile terminal according to a movement of the mobile terminal.
